# EUROPÄISCHE PATENTSCHRIFT

(11) **EP 3 519 224 B1**
(45) Veröffentlichungstag und Bekanntmachung des Hinweises auf die Patenterteilung: **08.10.2025**
(21) Anmeldenummer: 17767803.4
(22) Anmeldetag: 12.09.2017
(51) Int. Cl.: B60K 6/40, B60K 6/48

(54) **LAGERANORDNUNG**
BEARING ARRANGEMENT
ENSEMBLE PALIER

(30) Priorität: 28.09.2016 DE 102016218762
(43) Veröffentlichungstag der Anmeldung: 07.08.2019
(73) Patentinhaber: ZF Friedrichshafen AG, 88046 Friedrichshafen (DE)
(72) Erfinder: BREHMER, Martin, 88069 Tettnang (DE)
(74) Vertreter: ZF Friedrichshafen AG
(86) Internationale Anmeldenummer: PCT/EP2017/072803
(87) Internationale Veröffentlichungsnummer: WO 2018/059925

(56) Entgegenhaltungen:
- JP-A- 2005 212 494
- JP-A- 2009 220 771
- US-A1- 2013 086 798

## Beschreibung

Die Erfindung betrifft ein Getriebe mit einem Hauptgetriebe eines Kraftfahrzeugs, mit einer Lageranordnung für das, mit einer Welle, einem mit der Welle wirkverbundenen Übersetzungsgetriebe, das mit einer Eingangswelle des Hauptgetriebes wirkverbindbar ist, und einem ersten und einem zweiten Lager zum Lagern der Welle, nach dem Oberbegriff des Anspruchs 1.

Darüber hinaus betrifft die Erfindung ein Kraftfahrzeug mit dem Getriebe.

Aus dem Stand der Technik ist eine Vielzahl von Hybridgetrieben bekannt, die in Hybridfahrzeugen zum Einsatz kommen. Bei Hybridgetrieben besteht oftmals das Problem, dass das von der elektrischen Maschine abgegebene Drehmoment oder die Leistung für den gewünschten Fahrbetrieb nicht ausreicht und somit die Notwendigkeit besteht, das Drehmoment oder die Leistung der elektrischen Maschine zu erhöhen. Dies kann durch den Einsatz einer größeren elektrischen Maschine realisiert werden, wobei der vorgegebene Bauraum begrenzt ist, was die Größe der elektrischen Maschine begrenzt. Um dennoch das Drehmoment oder die Leistung zu steigern, ist bekannt, die elektrische Maschine mittels eines Übersetzungsgetriebes mit der Eingangswelle des Hauptgetriebes wirkzuverbinden.

DE 10 2014 202 621 A1 offenbart ein Getriebe mit einem Hybridmodul und einem Hauptgetriebe. Eine mit der elektrischen Maschine des Hybridmoduls drehfest verbundene Welle ist mittels eines Planetengetriebes mit der Eingangswelle des Hauptgetriebes wirkverbunden. Die Welle wird dabei durch zwei Lager gelagert, die sich bezogen auf das Planetengetriebe gegenüberliegen. Das Getriebe weist den Nachteil auf, dass es aufwendig zu montieren ist.

Die JP 2005 212494 A2 beschreibt eine Hybridfahrzeug-Antriebsvorrichtung mit einem Generator, dessen Rotor von einer Brennkraftmaschine angetrieben wird, einem Planetenradsatz, um das Abtriebsmoment der Brennkraftmaschine auf den Generator und eine Abtriebswelle aufzuteilen, und einem Motor, um die Abtriebswelle anzutreiben. Der Planetenradsatz ist zwischen dem Generator und dem Motor angeordnet. Der Rotor des Generators ist an einem Gehäusefortsatz gelagert, welcher sich entlang der Generatorachse erstreckt.

Die JP 2009 220771 A beschreibt einen Generator mit einem Planetenradsatz, welcher auf einer Ausgangswelle einer Brennkraftmaschine angeordnet ist. Der Planetenradsatz erhöht die Drehzahl der Brennkraftmaschine und überträgt die erhöhte Drehzahl zu einem Rotor des Generators.

Die US 2013/086798 A1 beschreibt ein Verfahren zum Assemblieren eines Hybridgetriebes. Dabei wird das Getriebe und eine Eingangswelle in einem Gehäuse montiert, anschließend ein Lager in ein Pumpengehäuse eingesetzt und das Pumpengehäuse an einer Pumpenplatte befestigt. Danach wird das Gehäuse entlang der Pumpenplatte geführt, eine Statorwelle auf das Pumpengehäuse über der Eingangswelle eingesetzt, und eine Rotorwelle und eine Rotornabe über der Statorwelle installiert.

Die Aufgabe der Erfindung besteht darin, ein Getriebe mit einer Lageranordnung anzugeben, mittels der eine Montage des Getriebes auf einfache Weise möglich ist.

Die Aufgabe wird durch das Getriebe der eingangs genannten Art gelöst, die dadurch gekennzeichnet ist, dass das erste Lager und das zweite Lager in einem Bereich der Lageranordnung angeordnet sind, der sich von einer Achsnormalebene des Übersetzungsgetriebes in die gleiche Richtung erstreckt.

Das erfindungsgemäße Getriebe bietet den Vorteil, dass eine Montage des Übersetzungsgetriebes und der Welle mit dem Hauptgetriebe auf einfache Weise möglich ist, da die Lagerung im Gegensatz zu den aus dem Stand der Technik bekannten Ausführungen nicht über das Übersetzungsgetriebe greifen muss, um eine ausreichende Lagerbasis zu erzielen, sondern beide Lager im denselben Bereich angeordnet sind. Darüber hinaus weist die Lageranordnung eine exakte und breite Lagerbasis auf, was sich vorteilhaft auf den Lagerwirkungsgrad aufweist.

Ein zur Lageranordnung nicht gehörendes Hauptgetriebe bezeichnet hier insbesondere ein mehrgängiges Hauptgetriebe, bei dem eine vordefinierte Anzahl an Gängen, also festen Übersetzungsverhältnissen zwischen der Eingangswelle und einer Hauptgetriebe-Ausgangswelle, durch Schaltelemente schaltbar ist. Derartige Hauptgetriebe finden vor allem in Kraftfahrzeugen Anwendung, um das Drehzahl- und Drehmomentabgabevermögen der Kraftfahrzeug-Antriebseinheit den Fahrwiderständen des Kraftfahrzeugs in geeigneter Weise anzupassen.

Unter einer Welle ist nachfolgend nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Die Achsnormalebene des Übersetzungsgetriebes entspricht einer Ebene, die senkrecht zu einer Mittelachse des Übersetzungsgetriebes ist. Das Übersetzungsgetriebe kann derart angeordnet sein, dass die Mittelachse des Übersetzungsgetriebes koaxial zu einer Mittelachse der Eingangswelle des Hauptgetriebes ist.

Die Richtung, entlang der sich der Bereich der Lageranordnung von der Achsnormalebene erstreckt, kann parallel zur Mittelachse des Übersetzungsgetriebes verlaufen. Das erste und/oder zweite Lager kann als Gleitlager ausgeführt sein und/oder kann die Welle, insbesondere ausschließlich, radial lagern.

Erfindungsgemäß ist in einem anderen Bereich der Lageranordnung, der sich von der Achsnormalen in eine andere Richtung erstreckt, kein Lager zum Lagern der Welle angeordnet. Dies bedeutet, dass die Welle durch keine Lager gelagert wird, die nicht in dem zuvor genannten Bereich angeordnet sind. Dadurch ist eine einfache Montage der Lageranordnung mit dem Hauptgetriebe möglich.

Das Übersetzungsgetriebe kann ein Planetenradsatz sein. Alternativ kann das Übersetzungsgetriebe aus miteinander in Eingriff stehenden Zahnrädern bestehen. Bei einer Ausführung des Übersetzungsgetriebes des Planetenradsatzes kann ein Hohlrad mit der Welle drehfest verbunden sein. Ein Steg kann mit der Eingangswelle des Hauptgetriebes drehfest verbunden sein und ein Sonnenrad kann mit einem Gehäusebestandteil des Hauptgetriebes, wie beispielsweise einer Zentrierplatte, drehfest verbunden sein. Das dritte Lager kann den Steg des Planetengetriebes axial lagern.

Das Übersetzungsgetriebe kann derart ausgeführt sein, dass es eine Übersetzung von 1,6 aufweist. Somit weist die Welle eine 1,6-fach höhere Drehzahl auf als die Eingangswelle. Alternativ kann das Übersetzungsgetriebe derart ausgeführt sein, dass die Übersetzung 1,5 beträgt. Eine Übersetzung von 1,6 ist vorteilhaft, da das Übersetzungsgetriebe im Vergleich zu einer Übersetzung von 1,5 in radialer Richtung kleiner ausgeführt ist. Somit verbleibt mehr Bauraum für das Vorsehen von weiteren Bauteilen, wie beispielsweise einer Sensoreinrichtung wie eines Drehzahlsensors, mittels dem die Drehzahl einer Komponente des Übersetzungsgetriebes, insbesondere des Hohlrads, und/oder der Welle ermittelt werden kann.

Ein Innendurchmesser des ersten und/oder zweiten Lagers kann kleiner sein als ein Außendurchmesser des Übersetzungsgetriebes. Insbesondere kann bei einer Ausführung des Übersetzungsgetriebes als Planetenradsatz der Innendurchmesser des ersten und zweiten Lagers kleiner sein als der Außendurchmesser des Stegs oder der Außendurchmesser der am Steg angebrachten Planetenräder. Im Ergebnis können beide Lager klein dimensioniert werden.

Darüber hinaus kann die Lageranordnung ein drittes Lager und ein viertes Lager zum Lagern der Welle aufweisen. Dabei kann das dritte und/oder vierte Lager die Welle, insbesondere ausschließlich, axial lagern. Dies bedeutet, dass die Welle in radialer Richtung durch das erste und zweite Lager und in axialer Richtung durch das dritte und vierte Lager gelagert werden kann. Dadurch ist eine Lagerung der Welle auf ganz besonders einfache Weise möglich.

Das dritte Lager kann zusätzlich zu der axialen Lagerung der Welle wenigstens eine Komponente des Übersetzungsgetriebes, insbesondere ausschließlich, axial lagern. Dadurch kann das dritte Lager dazu verwendet werden, zwei Baukomponenten der Lageranordnung gleichzeitig zu lagern.

Bei einer besonderen Ausführung kann die Lageranordnung eine elektrische Maschine aufweisen, die mit der Welle wirkverbunden ist. Dies kann dadurch realisiert werden, dass ein Rotor der elektrischen Maschine über eine drehfeste Verbindung, wie beispielsweise eine Steckverzahnung, oder über ein anderes Übersetzungsgetriebe mit der Welle verbunden ist. Eine derartige Lageranordnung kann als Hybridmodul ausgeführt sein, was den Vorteil bietet, dass eine Montage eines Getriebes auf einfache Weise möglich ist. So kann das Hybridmodul vor einem Ankoppeln an das Hauptgetriebe zusammengebaut und das Hybridmodul kann als ganze Einheit mit der Eingangswelle des Hauptgetriebes wirkverbunden werden.

Die elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Bei einer ganz besonderen Ausführung kann das erste Lager derart angeordnet sein, dass eine erste Lagerebene existiert, die das erste Lager und einen Rotorabschnitt eines Rotors der elektrischen Maschine aufweist und/oder dass das zweite Lager derart angeordnet ist, dass eine zweite Lagerebene existiert, die das zweite Lager und einen anderen Rotorabschnitt des Rotors der elektrischen Maschine aufweist. Dadurch ist sichergestellt, dass die Lageranordnung bzw. das Hybridmodul in axialer Richtung kompakt ausgebildet sind.

Von ganz besonderem Vorteil ist ein Getriebe, das neben dem Hauptgetriebe die Lageranordnung aufweist. Dabei ist eine Komponente des Übersetzungsgetriebes mit der Eingangswelle drehfest verbunden. Bei einer Ausführung des Übersetzungsgetriebes als Planetenradsatz ist der Steg mit der Eingangswelle drehfest verbunden.

Die drehfeste Verbindung kann dabei durch eine Steckverzahnung realisiert werden. Bei einer Steckverzahnung handelt es sich um eine Welle-Nabe-Verbindung, wobei das Drehmoment durch Zahnflanken übertragen wird. Die Welle ist dazu außenverzahnt, während die Nabe innenverzahnt ist. Im unbelasteten Zustand kann die Welle und Nabe in axialer Richtung zueinander bewegt werden.

Bei einer besonderen Ausführung können sich das erste und zweite Lager, insbesondere unmittelbar, an der Eingangswelle abstützen. Dadurch ist eine einfache Lagerung der Welle realisierbar.

Das Getriebe kann eine weitere Welle aufweisen, die mit der Eingangswelle, insbesondere mittels einer Steckverzahnung, drehfest verbunden ist. Dabei kann der Eingriff der Komponente des Übersetzungsgetriebes mit der Eingangswelle und der Eingriff der weiteren Welle mit der Eingangswelle in axialer Richtung voneinander beabstandet sein. Dies bietet den Vorteil, dass sich die Belastung der Eingangswelle infolge der Kopplung mit der Welle und mit der weiteren Welle auf unterschiedliche Bereiche der Eingangswellen verteilt.

Die weitere Welle kann mit einer nicht zum Getriebe gehörenden Kraftfahrzeug-Antriebseinheit, wie beispielsweise einem Verbrennungsmotor, drehfest verbindbar sein. Insbesondere kann die weitere Welle mittels eines Schaltelements, wie beispielsweise einer Kupplung, mit der Kraftfahrzeug-Antriebseinheit drehfest verbindbar sein. Alternativ kann die weitere Welle direkt, also ohne das Vorsehen eines Schaltelements, mit der Kraftfahrzeug-Antriebseinheit drehfest verbunden sein. Die weitere Welle dient dazu, der Eingangswelle neben dem von der elektrischen Maschine bereitgestellten Drehmoment ein weiteres von der Kraftfahrzeug-Antriebseinheit bereitgestelltes Drehmoment zuzuführen. Dabei kann die weitere Welle an dem von der Eingangswelle entfernten Ende Außenlamellen der Kupplung tragen.

Das zuvor genannte Schaltelement und/oder ein Sekundärdämpfer können radial unterhalb des Rotors der elektrischen Maschine und/oder in radialer Richtung zwischen dem Rotor und der Eingangswelle angeordnet sein. Dadurch ist ein in axialer Richtung kompakt ausgebildetes Getriebe möglich. Darüber hinaus kann das Schaltelement in axialer Richtung derart angeordnet sein, dass eine Ebene existiert, in der das Schaltelement, die Welle und die elektrische Maschine angeordnet ist.

Bei einer ganz besonderen Ausführung kann ein Wellenabschnitt der Welle in radialer Richtung zwischen der Eingangswelle und der weiteren Welle angeordnet sein. Die Welle kann die Eingangswelle wenigstens teilweise umschließen. Darüber hinaus kann die weitere Welle die Welle, insbesondere den Wellenabschnitt, wenigstens teilweise umschließen. Durch die zuvor genannte Ausbildung und/oder Anordnung der Welle, der weiteren Welle und der Eingangswelle ist eine kompakte Ausbildung des Getriebes möglich.

Die Welle ist umgeben von Bauteilen, wie der Eingangswelle und der weiteren Welle, mit dem Drehzahlfaktor 1. Dies bedeutet, dass zwischen den Bauteilen ein stets gleichbleibendes Drehzahlverhältnis besteht. Dies ist insbesondere bei der Ausführung des ersten und zweiten Lagers als Gleitlager von Vorteil.

Die Welle kann mittels des vierten Lagers, insbesondere unmittelbar, an der weiteren Welle, insbesondere ausschließlich, axial abgestützt sein. Somit ist eine axiale Abstützung der Welle auf einfache Weise möglich.

Das Übersetzungsgetriebe und die Welle können dem Hauptgetriebe triebtechnisch vorgeschaltet sein. Darüber hinaus kann die weitere Welle der Eingangswelle triebtechnisch vorgeschaltet sein.

Die Eingangswelle kann mehrere Bohrungen zum Führen von Öl aufweisen. Dabei gelangt das Öl über Kavitäten oder Schmiedetaschen in Komponenten, wie beispielsweise einer Stützwelle des Hauptgetriebes, in die Eingangswelle. Das Öl strömt von der Eingangswelle über die Welle und die weitere Welle zu einem Kolben oder einem dynamischen Druckausgleichsraum des Schaltelements. Dabei erfolgt die Abdichtung des Öls über Rechteckringe.

Die in der Beschreibung verwendeten Richtungsangaben "radial" oder "axial" beziehen sich bei der Lageranordnung auf die Mittelachse des Übersetzungsgetriebes. Bei dem Getriebe beziehen sich die Richtungsangaben "radial" oder "axial" auf die Mittelachse des Getriebes.

Von ganz besonderem Vorteil ist ein Kraftfahrzeug mit einem Getriebe und einer Kraftfahrzeug-Antriebseinheit. Die Kraftfahrzeug-Antriebseinheit kann mit der weiteren Welle drehfest verbindbar oder drehfest verbunden sein.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigen:
- Fig.1:: eine schematische Darstellung einer erfindungsgemäßen Lageranordnung gemäß einem ersten Ausführungsbeispiel,
- Fig.2:: eine schematische Darstellung einer erfindungsgemäßen Lageranordnung gemäß einem zweiten Ausführungsbeispiel.

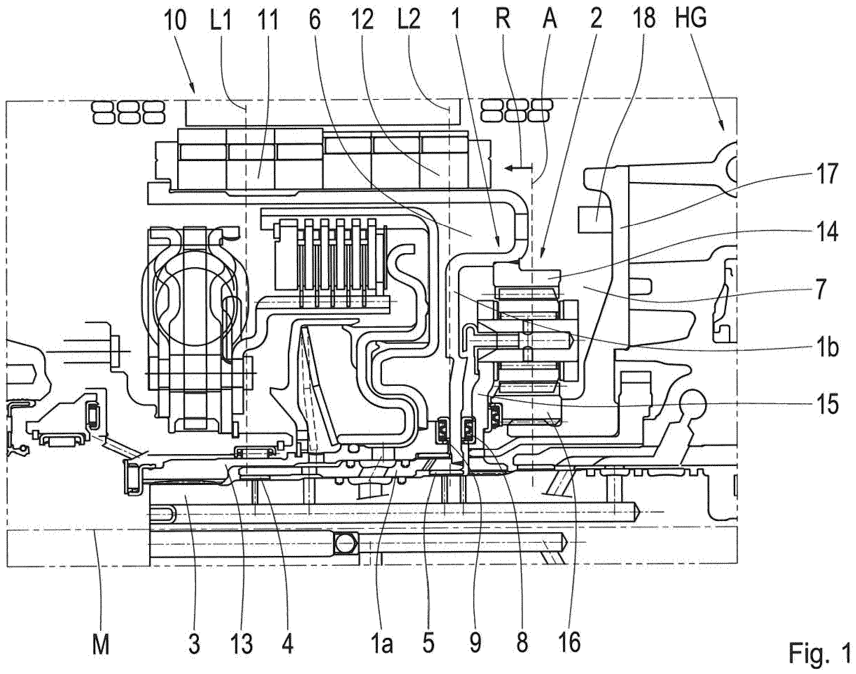

Figur 1 zeigt ein Getriebe mit der einer Lageranordnung und einem Hauptgetriebe HG, das mit der Lageranordnung wirkverbunden ist.

Die Lageranordnung weist eine Welle 1, ein mit der Welle 1 wirkverbundenes Übersetzungsgetriebe 2 und ein erstes und zweites Lager 4, 5 zum Lagern der Welle 1 auf. Das Übersetzungsgetriebe 2 ist als Planetenradsatz ausgeführt und mit einer Eingangswelle 3 des Hauptgetriebes HG wirkverbunden. Das erste Lager 4 und das zweite Lager 5 sind in einem Bereich 6 der Lageranordnung angeordnet, der sich von einer Achsnormalebene A des Übersetzungsgetriebes 2 in die gleiche Richtung R erstreckt. Das Planetengetriebe weist eine Übersetzung von 1,6 auf.

Die Achsnormalebene A trennt einen Raum der Lageranordnung in einen Bereich 6, der sich von der Achsnormalebene A in die Richtung R erstreckt, und einen anderen Bereich 7 auf, der sich von der Achsnormalebene A in eine andere Richtung, insbesondere in eine zur Richtung R entgegengesetzte Richtung, erstreckt. Die Richtung R verläuft parallel zu einer Mittelachse des Planetenradsatzes, die koaxial zu einer Mittelachse M des Getriebes ist.

Die Lageranordnung weist zusätzlich eine elektrische Maschine 10 auf, die mit der Welle 1 wirkverbunden ist. Insbesondere ist die Welle 1 mit einem Rotor der elektrischen Maschine 10 drehfest verbunden. Zudem ist die Welle 1 mit einem Hohlrad 14 des Planetenradsatzes drehfest verbunden.

Der Steg 15 des Planetenradsatzes ist mit der Eingangswelle 3 mittels einer Steckverzahnung drehfest verbunden. Das Sonnenrad 16 des Planetenradsatzes ist mit einem Gehäusebestandteil 17 des Hauptgetriebes HG, wie beispielsweise einer Zentrierplatte, drehfest verbunden. Dabei ist der Planetenradsatz koaxial zu dem Hauptgetriebe angeordnet. Insbesondere ist der Planetenradsatz koaxial zu einer Mittelachse der Eingangswelle 3 des Hauptgetriebes HG, die mit der Mittelachse M des Getriebes übereinstimmt.

Die Welle 1 weist an dem von der elektrischen Maschine 10 abgewandten Ende einen Wellenabschnitt 1a auf. Der Wellenabschnitt 1a erstreckt sich parallel zu der Mittelachse M des Getriebes und umschließt einen Teil der Eingangswelle 3. Die Welle 1 weist darüber hinaus einen anderen Wellenabschnitt 1b auf, der sich in radialer Richtung erstreckt und mit dem Wellenabschnitt 1a drehfest verbunden ist.

Der Wellenabschnitt 1a wird durch das erste Lager 4 und das zweite Lager 5 in radialer Richtung gelagert. Dabei stützt sich der Wellenabschnitt 1a mittels des ersten und zweiten Lagers 4, 5 auf der Eingangswelle 3 in radialer Richtung ab. Zudem wird die Welle 1, insbesondere der andere Wellenabschnitt 1b, in axialer Richtung durch das dritte Lager 8 und das vierte Lager 9 gelagert. Dabei ist das dritte Lager 8 in axialer Richtung zwischen der Welle 1, insbesondere dem anderen Wellenabschnitt 1b, und dem Steg 15 angeordnet.

Das Getriebe weist eine weitere Welle 13 auf, die mittels eines Schaltelements 18 mit einer in der Figur nicht dargestellten Kraftfahrzeug-Antriebseinheit drehfest verbindbar ist. Das Schaltelement 18 ist in radialer Richtung zwischen der elektrischen Maschine 10 und dem Wellenabschnitt 1a angeordnet. Darüber hinaus liegen sich das Schaltelement 18 und das Übersetzungsgetriebe 2 bezogen auf den anderen Wellenabschnitt 1b gegenüber.

Die weitere Welle 13 ist mit der Eingangswelle 3 mittels einer Steckverzahnung drehfest verbunden. Dabei erfolgt der Eingriff der weiteren Welle 13 mit der Eingangswelle 3 in einem Bereich, der in axialer Richtung beabstandet zu dem Eingriffsbereich des Stegs 15 mit der Eingangswelle 3 ist. Die weitere Welle 13 umschließt einen Teil des Wellenabschnitts 1a.

Der Wellenabschnitt 1a ist in radialer Richtung zwischen der Eingangswelle 3 und der weiteren Welle 13 angeordnet. Das vierte Lager 9 ist in axialer Richtung zwischen der Welle 1, insbesondere dem anderen Wellenabschnitt 1b, und der weiteren Welle 13 angeordnet und stützt die Welle 1 in axialer Richtung an der weiteren Welle 13 ab.

Das erste Lager 4 ist derart angeordnet, dass eine erste Lagerebene L1 existiert, in der das erste Lager und ein Rotorabschnitt 11 angeordnet sind. Das zweite Lager 5 ist derart angeordnet, dass eine zweite Lagerebene L2 existiert, in der das zweite Lager 5 und ein anderer Rotorabschnitt 12 angeordnet sind.

Das Getriebe weist eine Sensoreinrichtung 18 zum Messen der Drehzahl der Welle 1 und/oder der Drehzahl des Hohlrads 14 auf. Die Sensoreinrichtung 18 ist an dem Gehäusebestandteil 17 des Hauptgetriebes HG angeordnet.

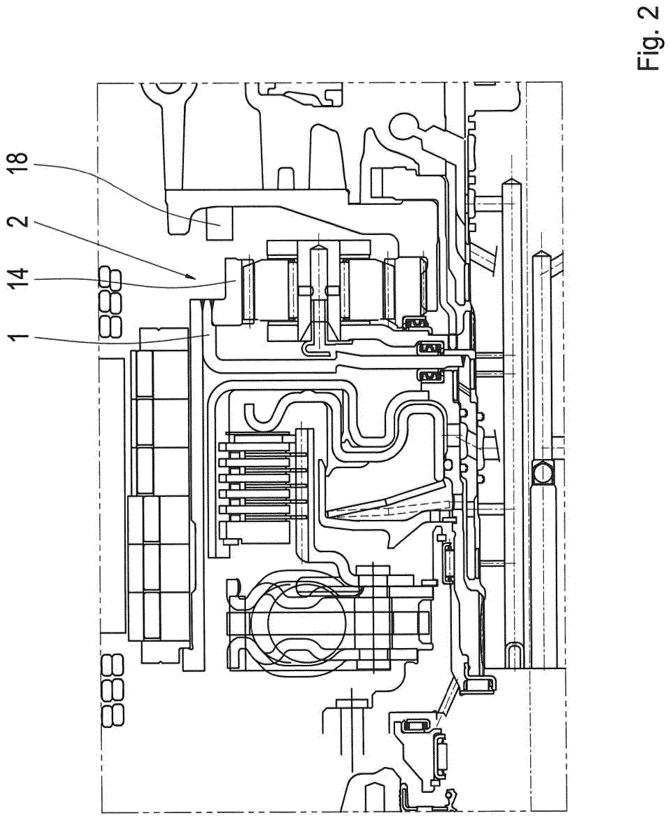

Figur 2 zeigt eine Lageranordnung gemäß einer zweiten Ausführung. Die Lageranordnung unterscheidet sich von der in Figur 1 dargestellten Lageranordnung in der Ausbildung des Übersetzungsgetriebes 2. So ist das in Figur 2 dargestellte Übersetzungsgetriebe 2 ebenfalls als Planetenradsatz ausgeführt, der jedoch derart ausgebildet ist, dass es eine Übersetzung von 1,5 aufweist. Aufgrund der geringeren Übersetzung erstreckt sich der Planetenradsatz in radialer Richtung weiter als der in Figur 1 dargestellte Planetenradsatz. Analog zu der in Figur 1 dargestellten Ausführung ist auch bei der in Figur 2 dargestellten Ausführung eine Sensoreinrichtung 18 zum Messen der Drehzahl von der Welle 1 und/oder dem Hohlrad 14 vorhanden.

### Bezugszeichen

- 1: Welle
- 2: Übersetzungsgetriebe
- 3: Eingangswelle
- 4: erstes Lager
- 5: zweites Lager
- 6: Bereich der Lageranordnung
- 7: anderer Bereich der Lageranordnung
- 8: drittes Lager
- 9: viertes Lager
- 10: elektrische Maschine
- 11: Rotorabschnitt
- 12: anderer Rotorabschnitt
- 13: weitere Welle
- 14: Hohlrad
- 15: Steg
- 16: Sonnenrad
- 17: Gehäusebestandteil
- 18: Sensoreinrichtung

- 1a: Wellenabschnitt
- 1b: anderer Wellenabschnitt
- A: Achsnormalebene
- M: Mittelachse
- R: Richtung
- L1: erste Lagerebene
- L2: zweite Lagerebene
- HG: Hauptgetriebe

## Patentansprüche

1. Getriebe mit einem Hauptgetriebe (HG) eines Kraftfahrzeugs, wobei das Hauptgetriebe (HG) eine Eingangswelle (3) aufweist, wobei das Getriebe eine Lageranordnung mit einer Welle (1) und ein mit der Welle (1) wirkverbundenes Übersetzungsgetriebe (2) aufweist, das mit der Eingangswelle (3) des Hauptgetriebes (HG) wirkverbindbar ist, wobei die Lageranordnung ein erstes und ein zweites Lager (4, 5) zum Lagern der Welle (1) aufweist, wobei das erste Lager (4) und das zweite Lager (5) in einem Bereich (6) der Lageranordnung angeordnet sind, der sich von einer Achsnormalebene (A) des Übersetzungsgetriebes (2) in die gleiche Richtung (R) erstreckt, wobei eine Komponente des Übersetzungsgetriebes (2) mit der Eingangswelle (3) drehfest verbunden ist,
wobei sich das erste und zweite Lager (4, 5) an der Eingangswelle (3) abstützen, **dadurch gekennzeichnet, dass** in einem anderen Bereich (7) der Lageranordnung, der sich von der Achsnormalebene (A) in eine andere Richtung erstreckt, kein Lager zum Lagern der Welle (1) angeordnet ist.

2. Getriebe nach Anspruch 1, **dadurch gekennzeichnet, dass**
a. ein Innendurchmesser des ersten und/oder zweiten Lagers (4, 5) kleiner ist als ein Außendurchmesser des Übersetzungsgetriebes (2) und/oder dass
b. das erste und/oder zweite Lager (4, 5) die Welle, insbesondere ausschließlich, radial lagert.

3. Getriebe nach Anspruch 1 oder 2, **dadurch gekennzeichnet, dass** die Lageranordnung ein drittes Lager (8) und ein viertes Lager (9) zum Lagern der Welle (1) aufweist, wobei das dritte und/oder vierte Lager (8, 9) die Welle (1), insbesondere ausschließlich, axial lagert.

4. Getriebe nach Anspruch 3, **dadurch gekennzeichnet, dass** das dritte Lager (8) zusätzlich wenigstens eine Komponente des Übersetzungsgetriebes (2), insbesondere ausschließlich, axial lagert.

5. Getriebe nach einem der Ansprüche 1 bis 4, **gekennzeichnet durch** eine elektrische Maschine (10), die mit der Welle (1) wirkverbunden ist.

6. Getriebe nach Anspruch 5, **dadurch gekennzeichnet, dass**
a. das erste Lager (4) derart angeordnet ist, dass eine erste Lagerebene (L1) existiert, die das erste Lager (4) und einen Rotorabschnitt (11) der elektrischen Maschine (10) aufweist und/oder dass
b. das zweite Lager (5) derart angeordnet ist, dass eine zweite Lagerebene (L2) existiert, die das zweite Lager (5) und einen anderen Rotorabschnitt (12) der elektrischen Maschine (10) aufweist.

7. Getriebe nach einem der Ansprüche 1 bis 6, **dadurch gekennzeichnet, dass** das Getriebe eine weitere Welle (13) aufweist, die mit der Eingangswelle (3) drehfest verbunden ist.

8. Getriebe nach Anspruch 7, **dadurch gekennzeichnet, dass** die Welle (1) einen Wellenabschnitt (1a) aufweist, der
a. in radialer Richtung zwischen der Eingangswelle (3) und der weiteren Welle (13) angeordnet ist und/oder der
b. von der weiteren Welle (13) wenigstens teilweise umschlossen ist.

9. Getriebe nach Anspruch 7 oder 8, **dadurch gekennzeichnet, dass** die Welle (1) mittels des vierten Lagers (9) an der weiteren Welle (13), insbesondere ausschließlich, axial abgestützt ist.

10. Getriebe nach einem der Ansprüche 1 bis 9, **dadurch gekennzeichnet, dass** die Welle (1) die Eingangswelle (3) wenigstens teilweise umschließt.

11. Getriebe nach einem der Ansprüche 1 bis 10, **dadurch gekennzeichnet, dass** das das Übersetzungsgetriebe (2) und die Welle (1) dem Hauptgetriebe (HG) triebtechnisch vorgeschaltet sind.

12. Kraftfahrzeug mit einem Getriebe nach einem der Ansprüche 1 bis 11, und einer Kraftfahrzeug-Antriebseinheit, **dadurch gekennzeichnet, dass** die Kraftfahrzeug-Antriebseinheit mit der weiteren Welle (13) drehfest verbindbar oder drehfest verbunden ist.

## Claims

1. A gear mechanism with a main gear mechanism (HG) of a motor vehicle, wherein the main gear mechanism (HG) has an input shaft (3), wherein the gear mechanism has a bearing arrangement with a shaft (1) and a transmission gear mechanism (2), operatively connected to the shaft (1), which is operatively connectable to the input shaft (3) of the main gear mechanism (HG), wherein the bearing arrangement has first and second bearings (4, 5) for bearing the shaft (1), wherein the first bearing (4) and the second bearing (5) are arranged in an area (6) of the bearing arrangement extending in the same direction (R) from an axis-normal plane (A) of the transmission gear mechanism (2), wherein a component of the transmission gear mechanism (2) is connected to the input shaft (3) in a rotationally fixed manner, wherein the first and second bearings (4, 5) are supported by the input shaft (3), **characterised in that,** in another area (7) of the bearing arrangement extending in another direction from the axis-normal plane (A), no bearing for bearing the shaft (1) is arranged.

2. The gear mechanism according to claim 1, **characterised in that**
a. an inner diameter of the first and/or second bearings (4, 5) is less than an outer diameter of the transmission gear mechanism (2), and/or **in that**
b. the first and/or second bearings (4, 5) radially, in particular exclusively, bear the shaft.

3. The gear mechanism according to claim 1 or 2, **characterised in that** the bearing arrangement has a third bearing (8) and a fourth bearing (9) for bearing the shaft (1), wherein the third and/or fourth bearings (8, 9) axially, in particular exclusively, bear the shaft (1).

4. The gear mechanism according to claim 3, **characterised in that** the third bearing (8) axially, in particular exclusively, bears at least one component of the transmission mechanism (2) additionally.

5. The gear mechanism according to any of claims 1 to 4, **characterised by** an electrical machine (10) operatively connected to the shaft (1).

6. The gear mechanism according to claim 5, **characterised in that**
a. the first bearing (4) is arranged such that there is a first bearing plane (L1), having the first bearing (4) and one rotor portion (11) of the electrical machine (10), and/or **in that**
b. the second bearing (5) is arranged such that there is a second bearing plane (L2), having the second bearing (5) and another rotor portion (12) of the electrical machine (10).

7. The gear mechanism according to any of claims 1 to 6, **characterised in that** the bearing has a further shaft (13), connected to the input shaft (3) in a rotationally fixed manner.

8. The gear mechanism according to claim 7, **characterised in that** the shaft (1) has a shaft portion (1a),
a. arranged in a radial direction between the input shaft (3) and the further shaft (13), and/or
b. at least partially enclosed by the further shaft (13).

9. The gear mechanism according to claim 7 or 8, **characterised in that** the shaft (1) is axially, in particular exclusively, supported by the further shaft (13) by means of the fourth bearing (9).

10. The gear mechanism according to any of claims 1 to 9, **characterised in that** the shaft (1) at least partially encloses the input shaft (3).

11. The gear mechanism according to any of claims 1 to 10, **characterised in that** the transmission gear mechanism (2) and the shaft (1) are drive-technologically upstream of the main gear mechanism (HG).

12. A motor vehicle with a gear mechanism according to any of claims 1 to 11 and a motor vehicle drive unit, **characterised in that** the motor vehicle drive unit is connectable in a rotationally fixed manner or connected in a rotationally fixed manner to the further shaft (13).

## Revendications

1. Transmission avec une transmission principale (HG) d'un véhicule automobile, la transmission principale (HG) comportant un arbre d'entrée (3), la transmission comportant un agencement de palier avec un arbre (1) et un réducteur de transmission (2) relié de manière fonctionnelle à l'arbre (1), qui peut être relié de manière fonctionnelle à l'arbre d'entrée (3) de la transmission principale (HG), l'agencement de paliers comportant des premier et deuxième paliers (4, 5) pour le montage de l'arbre (1), le premier palier (4) et le deuxième palier (5) sont disposés dans une zone (6) du dispositif de palier qui s'étend dans la même direction (R) à partir d'un plan axial normal (A) du réducteur (2), une composante du réducteur (2) étant reliée de manière solidaire en rotation à l'arbre d'entrée (3), le premier et le deuxième palier (4, 5) s'appuient sur l'arbre d'entrée (3), **caractérisé en ce qu'**aucun palier n'est disposé pour supporter l'arbre (1) dans une autre zone (7) de l'agencement de paliers qui s'étend dans une autre direction à partir du plan axial normal (A).

2. Transmission selon la revendication 1, **caractérisée en ce que**
a. le diamètre intérieur du premier et/ou du deuxième palier (4, 5) est inférieur au diamètre extérieur du réducteur de transmission (2) et/ou que
b. le premier et/ou le deuxième palier (4, 5) supporte l'arbre, notamment exclusivement radialement.

3. Transmission selon la revendication 1 ou 2, **caractérisée en ce que** le dispositif de palier comprend un troisième palier (8) et un quatrième palier (9) pour supporter l'arbre (1), le troisième et/ou le quatrième palier (8, 9) supportant l'arbre (1) axialement, en particulier exclusivement.

4. Transmission selon la revendication 3, **caractérisée en ce que** le troisième palier (8) supporte en outre au moins un composant du réducteur (2), en particulier exclusivement, dans le sens axial.

5. Transmission selon l'une quelconque des revendications 1 à 4, **caractérisée par** une machine électrique (10) qui est reliée de manière fonctionnelle à l'arbre (1).

6. Transmission selon la revendication 5, **caractérisée en ce que**
a. le premier palier (4) est disposé de telle sorte qu'il existe un premier plan de palier (L1) qui comprend le premier palier (4) et une partie de rotor (11) de la machine électrique (10) et/ou **en ce que**
b. le deuxième palier (5) est disposé de telle sorte qu'il existe un deuxième plan de palier (L2) qui comprend le deuxième palier (5) et une autre partie de rotor (12) de la machine électrique (10).

7. Transmission selon l'une quelconque des revendications 1 à 6, **caractérisée en ce que** la transmission comporte un autre arbre (13) qui est relié de manière solidaire en rotation à l'arbre d'entrée (3).

8. Transmission selon la revendication 7, **caractérisée en ce que** l'arbre (1) comporte une partie d'arbre (1a) qui
a. est disposée dans le sens radial entre l'arbre d'entrée (3) et l'autre arbre (13) et/ou qui
b. est au moins partiellement entourée par l'autre arbre (13).

9. Transmission selon la revendication 7 ou 8, **caractérisée en ce que** l'arbre (1) est supporté axialement, notamment exclusivement, sur l'autre arbre (13) au moyen du quatrième palier (9).

10. Transmission selon l'une quelconque des revendications 1 à 9, **caractérisée en ce que** l'arbre (1) entoure au moins partiellement l'arbre d'entrée (3).

11. Transmission selon l'une quelconque des revendications 1 à 10, **caractérisée en ce que** le réducteur (2) et l'arbre (1) sont montés en amont de la transmission principale (HG) du point de vue technique d'entraînement.

12. Véhicule automobile avec une transmission selon l'une quelconque des revendications 1 à 11, et une unité d'entraînement de véhicule automobile, **caractérisé en ce que** l'unité d'entraînement de véhicule automobile peut être reliée de manière solidaire en rotation à l'arbre supplémentaire (13) ou est reliée de manière solidaire en rotation à celui-ci.
